# EUROPÄISCHE PATENTSCHRIFT

(11) **EP 2 451 672 B1**
(45) Veröffentlichungstag und Bekanntmachung des Hinweises auf die Patenterteilung: **11.09.2013**
(21) Anmeldenummer: 10729886.1
(22) Anmeldetag: 07.07.2010
(51) Int. Cl.: B60K 35/00

(54) **VERFAHREN UND VORRICHTUNG ZUM BEREITSTELLEN EINER BENUTZERSCHNITTSTELLE IN EINEM FAHRZEUG**
METHOD AND DEVICE FOR PROVIDING A USER INTERFACE IN A VEHICLE
PROCÉDÉ ET DISPOSITIF PERMETTANT DE FOURNIR UNE INTERFACE UTILISATEUR DANS UN VÉHICULE

(30) Priorität: 07.07.2009 DE 102009032069
(43) Veröffentlichungstag der Anmeldung: 16.05.2012
(73) Patentinhaber: Volkswagen Aktiengesellschaft, 38440 Wolfsburg (DE)
(72) Erfinder: WEHLING, Ulrike, 38104 Braunschweig (DE); FABIAN, Thomas, 31139 Hildesheim (DE)
(74) Vertreter: Reitstötter - Kinzebach
(86) Internationale Anmeldenummer: PCT/EP2010/059744
(87) Internationale Veröffentlichungsnummer: WO 2011/003947

(56) Entgegenhaltungen:
- EP-A1- 2 018 992
- DE-A1- 10 147 940
- DE-A1-102006 037 156
- DE-A1-102007 039 442
- DE-A1-102007 048 599

## Beschreibung

Die vorliegende Erfindung betrifft ein Verfahren und eine Vorrichtung zum Bereitstellen einer Benutzerschnittstelle in einem Fahrzeug. Die Vorrichtung umfasst eine Anzeigefläche, die in dem Fahrzeug angeordnet ist. Mittels der Anzeigefläche können Bedienobjekte und/oder Anzeigeobjekte angezeigt werden.

In einem Fahrzeug, insbesondere in einem Kraftfahrzeug, ist eine Vielzahl von elektronischen Einrichtungen vorgesehen, deren Bedienung dem Fahrer oder einem anderen Fahrzeuginsassen ermöglicht werden muss. Zu diesen Einrichtungen gehören beispielsweise ein Navigationssystem, eine Vielzahl von Fahrerassistenzsystemen sowie Kommunikations- und Multimediaanwendungen, die z. B. eine Telefonanlage und Einrichtungen zur Wiedergabe von Musik und Sprache, wie z. B. ein Radio oder einen CD-Spieler, umfassen.

Um die vielfältigen Einrichtungen im Fahrzeug bedienen zu können werden in Fahrzeugen vielfach Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Aus der EP 0 366 132 B1 ist eine Multifunktionsbedieneinrichtung bekannt, bei der die Auswahl von Funktionsgruppen und die Auswahl individueller Funktionen mittels eines Drehdrückschalters erfolgt, bei dem der Schalter in Richtung der Drehachse betätigbar ist. Aus der DE 199 44 324 ist eine Multifunktionsbedienvorrichtung bekannt, die einen Drehschalter zur Auswahl von Funktionen aufweist, die innerhalb eines Anzeigefeldes eines Displays darstellbar sind. Um den Drehschalter herum sind Druckschalter angeordnet, denen ebenfalls Anzeigefelder des Displays zugeordnet sind. Schließlich ist aus der DE 103 24 579 A1 eine Bedienvorrichtung zur Steuerung von Fahrzeugeinrichtungen bekannt, die ein berührungsempfindliches Bedienfeld aufweist.

Neben den vorstehend beschriebenen abgesetzten Bedienelementen wurde ferner vorgeschlagen, das Display selbst mit einer berührungsempfindlichen Oberfläche auszustatten und auf diese Weise einen so genannten Touchscreen zur Verfügung zu stellen. Bei einem solchen Touchscreen erfolgt die Bedienung dadurch, dass der Nutzer z. B. mit seiner Fingerspitze den Touchscreen berührt. Die Position der Berührung und ggf. die Bewegung während der Berührung wird erfasst, ausgewertet und einem Bedienschritt zugeordnet. Um den Nutzer bei der Bedienung zu unterstützen, können auf dem Display virtuelle Schalter als graphische Schaltflächen dargestellt werden. Eine Anzeigevorrichtung mit einer berührungsempfindlichen Oberfläche, die in Verbindung mit einem Navigationssystem eingesetzt wird, ist beispielsweise in der DE 10 2005 020 155 A1 beschrieben.

Für die Bedienung der vielfältigen Einrichtungen eines Fahrzeugs ergeben sich sehr spezielle Anforderungen, da die Bedienung unter anderem durch den Fahrer erfolgen kann. Es ist daher sehr wichtig, dass der Bedienvorgang nicht zu einer Ablenkung des Fahrers während der Fahrt führt. Der Bedienvorgang sollte daher insbesondere so wenig Aufmerksamkeit vom Fahrer erfordern wie möglich und außerdem schnell durchführbar sein.

Um eine einfach zu bedienende Benutzerschnittstelle in einem Fahrzeug bereitzustellen wird in der DE 100 22 321 A1 eine Vorrichtung zum Erkennen einer Handstellung vorgeschlagen. Die Vorrichtung umfasst eine Einrichtung zum Umsetzen der erkannten Handstellung in eine Arbeitsanweisung an eine Recheneinheit, mit deren Hilfe eine Fahrzeugfunktion steuerbar ist. Ein Verfahren mit den Merkmalen des Oberbegriffs des Anspruchs 1, bzw. eine Vorrichtung mit den Merkmalen des Oberbegriffs des Anspruches zeigt die DE 10 2007 039 442 A1.

Der vorliegenden Erfindung liegt die Aufgabe zugrunde, ein Verfahren und eine Vorrichtung bereitzustellen mit denen eine Benutzerschnittstelle in einem Fahrzeug von einem Nutzer einfach und intuitiv gesteuert werden kann.

Diese Aufgabe wird erfindungsgemäß durch ein Verfahren mit den Merkmalen des Anspruchs 1 und eine Vorrichtung mit den Merkmalen des Anspruchs 8 gelöst. Vorteilhafte Aus- und Weiterbildungen ergeben sich aus den abhängigen Ansprüchen.

Bei dem erfindungsgemäßen Verfahren sind auf einer in dem Fahrzeug angeordneten Anzeigefläche Bedienobjekte und/oder Anzeigeobjekte anzeigbar. Des Weiteren wird eine Geste in einem Erfassungsraum erfasst, der vor der Anzeigefläche angeordnet ist. Die erfasste Geste wird einem Bedienobjekt und/oder Anzeigeobjekt und einem Steuerbefehl zugeordnet. Der Steuerbefehl wird anschließend ausgeführt.

Unter einer *Geste* wird im Sinne der Erfindung eine bestimmte Stellung der Hand eines Nutzers oder eine bestimmte Bewegung, die mit der Hand des Nutzers ausgeführt wird, verstanden. Die Gesten werden im Erfassungsraum vor der Anzeigefläche ausgeführt, ohne dass eine Berührung der Anzeigefläche erforderlich ist. Durch die Steuerung der Benutzerschnittstelle des Fahrzeugs mittels Gesten wird dem Nutzer eine besonders einfache und intuitive Eingabemöglichkeit zur Steuerung des Anzeigeinhalts auf der Anzeigefläche oder von Einrichtungen des Fahrzeugs bereitgestellt.

Gemäß einer Ausgestaltung des erfindungsgemäßen Verfahrens umfasst die Geste eine von der Hand eines Nutzers ausgeführte Bewegung. Die Bewegungsrichtung der Geste steht insbesondere in Verbindung mit einer Bewegungsrichtung oder einer Funktion, die der Geste zugeordnet ist. Die Bewegungsrichtung kann insbesondere direkt mit dem Bedienobjekt gekoppelt sein. Das Bedienobjekt kann nämlich ein mittels der Geste steuerbares Bewegungselement umfassen. In diesem Fall bewegt die bei der Geste ausgeführte Bewegung das Bewegungselement auf der Anzeigefläche, wodurch der Steuerbefehl erzeugt wird. Bei dem Bedienobjekt kann es sich beispielsweise um einen auf der Anzeigefläche dargestellten Schiebe- oder Drehschalter handeln. Ein solches Bedienelement kann durch eine Bewegung einer Geste betätigt werden, die einem Schieben oder Drehen des Bedienobjekts entspricht, wobei die entsprechende Bewegung berührungslos im Erfassungsraum vom Nutzer ausgeführt wird. Eine derartige Betätigung eines Bedienobjekts, welches auf der Anzeigefläche angezeigt wird, bietet den Vorteil, dass der Nutzer nicht - wie beispielsweise bei einer berührungsempfindlichen Oberfläche - einen bestimmten Flächenbereich treffen muss. Es reicht vielmehr aus, dass er seine Hand in den Erfassungsraum bewegt und dort die dem Bedienobjekt zugeordnete Geste ausführt. Die Geste entspricht dabei insbesondere einer Bewegung, die beispielsweise bei mechanischen Bedienelementen ausgeführt wird, so dass sich der Nutzer diese Gesten sehr leicht merken kann.

Gemäß einer weiteren nicht-erfindungsgemäßen Ausgestaltung des Verfahrens wird einer Geste, die eine horizontale Bewegung umfasst, ein Steuerbefehl zugeordnet, der die Anzeige eines animierten Anzeigeobjekts bewirkt, mittels welchem Fahrzeugfunktionen optisch und/oder akustisch erklärbar sind. Bei dem Anzeigeobjekt handelt es sich insbesondere um einen virtuellen Assistenten bzw. einem so genannten Avatar, der die Fahr-zeuginsassen unterstützt. Bei einer heranwinkenden Geste wird beispielsweise das animierte Anzeigeobjekt eingeblendet, bei einer wegwinkenden Geste wird das animierte Anzeigeobjekt ausgeblendet. Um entscheiden zu können, ob es sich bei der Geste um eine heranwinkende oder eine wegwinkende Geste handelt, wird zusätzlich erfasst, welcher Fahrzeuginsasse die Geste ausgeführt hat.

Gemäß des erfindungsgemäßen Verfahrens sind für die Fahrerseite und die Beifahrerseite gleichzeitig verschiedene Anzeigeinhalte anzeigbar. Es handelt es sich bei der Anzeigefläche somit um ein so genanntes Dual-View-Display. In diesem Fall kann einer Geste, die eine horizontale Bewegung in Richtung des Beifahrers umfasst, ein Steuerbefehl zugeordnet werden, der bewirkt, dass der Anzeigeinhalt für die Fahrerseite auch für die Beifahrerseite angezeigt wird. Umgekehrt kann einer Geste, die eine horizontale Bewegung in Richtung des Fahrers umfasst, ein Steuerbefehl zugeordnet werden, der bewirkt, dass der Anzeigeinhalt für die Beifahrerseite auch für die Fahrerseite angezeigt wird.

Gemäß einer weiteren Ausgestaltung des erfindungsgemäßen Verfahrens wird auf der Anzeigefläche ein Teil einer Liste angezeigt. Um einen anderen Teil der Liste zur Anzeige zu bringen ist ein Bildlauf in einer Bildlaufrichtung erzeugbar. Der Bildlauf kann bei dem erfindungsgemäßen Verfahren dadurch erzeugt werden, dass eine Geste erfasst wird, die eine Bewegung in der Bildlaufrichtung umfasst. Wird beispielsweise eine Liste angezeigt bei welcher die Listeneinträge vertikal untereinander angeordnet sind, kann ein Bildlauf dadurch hervorgerufen werden, dass im Erfassungsraum eine Geste mit einer vertikalen Bewegung nach unten bzw. nach oben ausgeführt wird.

Gemäß einer weiteren Ausgestaltung des erfindungsgemäßen Verfahrens wird ein Bedienobjekt zum Einstellen der Lautstärke einer akustischen Ausgabe angezeigt. In diesem Fall ist einer Geste, die eine Bewegung in einer definierten Richtung umfasst, ein Steuerbefehl zugeordnet, welcher bewirkt, dass die Lautstärke erhöht wird, und einer Geste, die eine Bewegung in der entgegengesetzten Richtung umfasst, ein Steuerbefehl zugeordnet, welcher bewirkt, dass die Lautstärke erniedrigt wird.

Des Weiteren kann ein Bedienobjekt zum Stummschalten einer akustischen Ausgabe angezeigt werden. In diesem Fall ist einer Geste, die eine Bewegung in einer definierten Richtung umfasst, ein Steuerbefehl zugeordnet, welche eine Stummschaltung bewirkt, und einer Geste, die eine Bewegung in der entgegengesetzten Richtung umfasst, ein Steuerbefehl zugeordnet, welcher die Stummschaltung aufhebt. Die Richtung zum Erhöhen der Lautstärke und zum Aufheben der Stummschaltung ist insbesondere eine vertikale Richtung nach oben und die entgegengesetzte Richtung zum Erniedrigen der Lautstärke und zum Stummschalten der akustischen Ausgabe eine vertikale Richtung nach unten.

Gemäß einer weiteren Ausgestaltung des erfindungsgemäßen Verfahrens wird ein Bedienobjekt zum Signalisieren eines eingehenden Telefonanrufs angezeigt. In diesem Fall ist einer Geste, bei der eine Bewegung ausgeführt wird, die einem Abnehmen eines Hörers entspricht, ein Steuerbefehl zugeordnet, welcher bewirkt, dass der Telefonanruf abgenommen wird. Des Weiteren kann einer Geste, bei der eine Bewegung ausgeführt wird, die einem Auflegen eines Hörers entspricht, ein Steuerbefehl zugeordnet sein, welcher bewirkt, dass ein laufendes Telefongespräch beendet wird oder ein eingehender Anruf abgewiesen wird.

Die erfindungsgemäße Vorrichtung ist so ausgebildet, dass sie das vorstehende Verfahren zum Teil oder vollständig ausführen kann. Sie umfasst eine Anzeigefläche zum Anzeigen von Bedienobjekten und/oder Anzeigeobjekten. Die Anzeigefläche ist in dem Fahrzeug angeordnet. Ferner umfasst die Vorrichtung eine Gestenerfassungseinrichtung zum Erfassen von Gesten in einem Erfassungsraum, der vor der Anzeigefläche angeordnet ist. Mit einer Analyseeinrichtung können die erfassten Gesten Bedienobjekten und/oder Anzeigeobjekten sowie zusätzlich einem Steuerbefehl zugeordnet werden. Mit einer Steuervorrichtung ist der Steuerbefehl ausführbar.

Dabei ist die Anzeigefläche so ausgebildet, dass für verschiedene Betrachtungswinkel gleichzeitig verschiedene Anzeigeinhalte anzeigbar sind. Die Betrachtungswinkel entsprechen dabei insbesondere zum einen dem Winkel, aus welchem der Fahrer die Anzeigefläche betrachtet, und zum anderen den Winkel, aus welchem der Beifahrer die Anzeigefläche betrachtet.

Die Erfindung wird nun anhand von Ausführungsbeispielen mit Bezug zu den Zeichnungen erläutert.
- Figur 1: zeigt schematisch eine nicht-erfindungsgemäße Vorrichtung,
- Figur 2: zeigt die Anzeigevorrichtung des Ausführungsbeispiels der erfindungsgemäßen Vorrichtung und
- Figur 3: zeigt schematisch einen Teil der Vorrichtung des Ausführungs-beispiels.

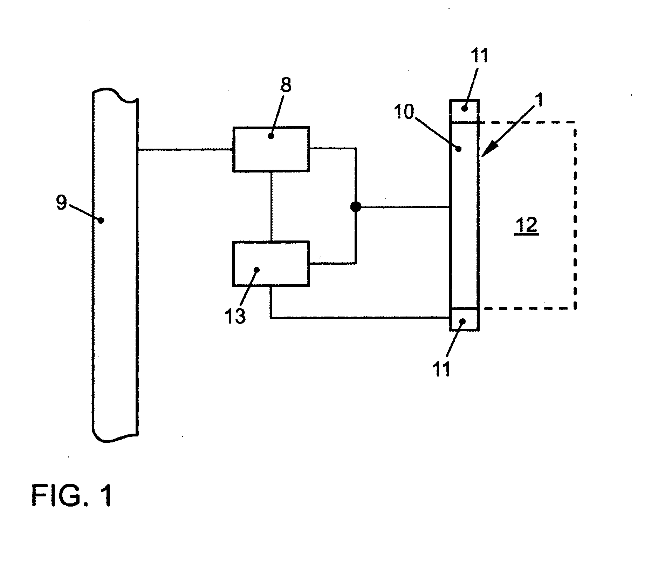

Mit Bezug zu Fig. 1 wird eine nicht-erfindungsgemäße Vorrichtung und Verfahren erläutert:

Die Vorrichtung dient der Bereitstellung einer Benutzerschnittstelle in einem Fahrzeug. Sie umfasst eine Anzeigevorrichtung 10 mit einer Anzeigefläche 1. Die Anzeigefläche 1 kann von einem Display beliebiger Bauart bereitgestellt werden. Die Anzeigevorrichtung 10 ist mit einer Steuervorrichtung 8 verbunden. Die Steuervorrichtung 8 erzeugt Graphikdaten die mittels der Anzeigefläche 1 im Innenraum des Fahrzeugs für die Fahrzeuginsassen sichtbar wiedergegeben werden. Es können für die Benutzerschnittstelle insbesondere Bedienobjekte und Anzeigeobjekte angezeigt werden. Diese Bedien- und Anzeigeobjekte unterstützen den Nutzer bei der Steuerung von Einrichtungen des Fahrzeugs. Ferner dienen die Anzeigeobjekte der Infortnationsvermittlung.

Die Steuervorrichtung 8 ist ferner mit einem Fahrzeugbus 9 verbunden. Über diese Verbindung kann die Steuervorrichtung 8 bidirektional Daten mit anderen Einrichtungen des Fahrzeugs austauschen. Der Steuervorrichtung 8 können insbesondere Daten übertragen werden, welche die Steuervorrichtung 8 so weiterverarbeitet, dass auf der Anzeigefläche 1 ein Anzeigeinhalt erzeugt wird, welcher den Nutzer bei der Steuerung der Fahrzeugeinrichtungen unterstützt.

Des Weiteren ist eine Gestenerfassungseinrichtung 11 vorgesehen, mit der Gesten eines Nutzers in einem Erfassungsraum 12 erfasst werden können. Der Erfassungsraum 12 ist vor der Anzeigefläche 1 angeordnet. Die Gestenerfassungseinrichtung 11 ist Teil einer Eingabevorrichtung für die Benutzerschnittstelle. Der Nutzer kann im Erfassungsraum 12 Gesten ausführen, um die Anzeige auf der Anzeigefläche 1 sowie weitere Einrichtungen des Fahrzeugs zu steuern, wie es später erläutert wird.

Die Gestenerfassungseinrichtung 11 kann z. B. Infrarotlichtquellen und Infrarotlichtdetektoren umfassen. Alternativ kann die Gestenerfassungseinrichtung 11 ein optisches System umfassen, welches eine Kamera umfasst, welche die im Erfassungsraum 12 ausgeführte Geste aufnimmt. Des Weiteren kann das optische System eine lichtemittierende Diode umfassen, die z. B. rechteckförmiges amplitudenmoduliertes Licht emittiert. Dieses Licht wird an der Hand eines Nutzers, welcher die Geste im Erfassungsraum 12 ausführt, reflektiert und gelangt nach der Reflexion zu einer Photodiode der Gestenerfassungseinrichtung 11. Eine weitere lichtemittierende Diode emittiert ebenfalls rechteckförmiges amplitudenmoduliertes Licht zur Photodiode, welches jedoch um 180° phasenversetzt ist. Bei der Photodiode überlagern sich die beiden Lichtsignale und heben sich auf, falls sie genau die gleiche Amplitude aufweisen. Falls sich die Signale bei der Photodiode nicht aufheben, wird die Lichtemission der zweiten Diode über einen Regelkreis so geregelt, dass sich das Gesamtempfangssignal wieder zu Null ergänzt. Ändert sich die Position der Hand des Nutzers im Erfassungsraum 12, ändert sich auch der Lichtanteil, welcher von der ersten lichtemittierenden Diode zur Photodiode über die Reflexion an der Hand gelangt. Dies bewirkt ein Nachführen der Intensität der zweiten lichtemittierenden Diode durch den Regelkreis. Das Regelsignal ist somit ein Maß für die Reflexion des Lichts, welches von der ersten Diode emittiert wird, an der Hand des Nutzers, welcher die Geste ausführt. Auf diese Weise lässt sich aus dem Regelkreis ein Signal ableiten, welches für die Position der Hand des Nutzers charakteristisch ist.

Die Gestenerfassungseinrichtung 11 ist mit der Steuervorrichtung 8 und einer Analyseeinrichtung 13 verbunden. Die Analyseeinrichtung 13 ist ferner mit der Anzeigevorrichtung 10 verbunden. Die Anzeigevorrichtung 10 überträgt den Anzeigeinhalt an die Analyseeinrichtung 13. In Abhängigkeit von dem aktuell angezeigten Bedienobjekt bzw. Anzeigeobjekt ordnet die Analyseeinrichtung 13 der erfassten Geste einen Steuerbefehl zu. Diesen Steuerbefehl überträgt die Analyseeinrichtung 13 an die Steuervorrichtung 8, welche den Steuerbefehl ausführt. Hierfür überträgt die Steuervorrichtung 8 entsprechende Daten an den Fahrzeugbus 9 und/oder ändert den von der Anzeigefläche 1 angezeigten Anzeigeinhalt.

Im Folgenden werden verschiedene Beispiele für Gesten und die den Gesten zugeordneten Steuerbefehle erläutert:

Auf der Anzeigefläche 1 kann ein animiertes Anzeigeobjekt angezeigt werden, welches Fahrzeugfunktionen optisch und/oder akustisch erklärt. Der Nutzer kann dieses Anzeigeobjekt zur Anzeige bringen, indem er im Erfassungsraum 12 eine heranwinkende Geste ausführt. Ferner kann er dieses Anzeigeobjekt ausblenden, indem er eine wegwinkende Geste im Erfassungsraum 12 ausführt. Die heranwinkende oder wegwinkende Geste wird von der Gestenerfassungseinrichtung 11 erfasst, von der Analyseeinrichtung 13 dem entsprechenden animierten Anzeigeobjekt und einem Steuerbefehl zugeordnet, welcher ein Einblenden oder Ausblenden dieses animierten Anzeigeobjekts bewirkt. Falls die Geste von verschiedenen Fahrzeuginsassen ausgeführt werden kann, die insbesondere auf dem Fahrersitz oder Beifahrersitz des Fahrzeug sitzen, kann außerdem erfasst werden, welcher Fahrzeuginsasse die Geste ausgeführt hat, um eindeutig bestimmen zu können ob es sich um eine heranwinkende oder wegwinkende Geste handelt. Wie erfasst werden kann, welcher Fahrzeuginsasse eine Geste ausführt, wird später mit Bezug zu dem zweiten Ausführungsbeispiel erläutert.

Bei einem Bediensystem, dem eine hierarchische Menüstruktur zugrunde liegt, tritt häufig der Fall auf, dass eine Liste mit mehreren Listeneinträgen angezeigt wird. Da die Anzeigefläche 1 jedoch begrenzt ist, wird vielfach nur ein Teil der Gesamtliste angezeigt In diesem Fall ergibt sich die Notwendigkeit, einen Bildlauf (Scrollen) der Liste zu erzeugen, um andere Listeneinträge zur Anzeige zu bringen. Werden beispielsweise die Listeneinträge untereinander angezeigt, kann ein Bildlauf nach unten oder nach oben erzeugt werden. Der Nutzer kann, um einen Bildlauf nach unten zu erzeugen, im Erfassungsraum 12 eine Geste ausführen, die eine Bewegung der Hand nach unten umfasst. Diese Geste wird in Verbindung mit der Anzeige der Liste einem Steuerbefehl zugeordnet, der den Bildlauf nach unten bewirkt. Entsprechend wird eine Geste mit einer Bewegung nach oben in Verbindung mit der Liste so interpretiert, dass ein Bildlauf nach oben erzeugt wird.

Des Weiteren können auf der Anzeigefläche Bedienobjekte angezeigt werden, die mittels Gesten betätigt werden. Beispielsweise kann ein virtueller Drehschalter auf der Anzeigefläche 1 angezeigt werden. Um den Drehschalter zu betätigen, führt der Nutzer im Erfassungsraum 12 mit seiner Hand eine Drehbewegung im Uhrzeigersinn oder in entgegengesetzter Drehrichtung aus. Diese Geste wird in Verbindung mit der Anzeige des virtuellen Drehschalters für die Lautstärke einer akustischen Ausgabe einem Steuerbefehl zugeordnet, der dazu führt dass die Lautstärke erhöht oder erniedrigt wird. Auf gleiche Weise kann ein Bedienobjekt zum Stummschalten einer akustischen Ausgabe angezeigt werden, die mittels einer Geste eingeschaltet und wieder aufgehoben werden kann.

Die Steuervorrichtung 8 kann ferner über den Fahrzeugbus 9 mit einer Telekommunikationseinrichtung gekoppelt sein. Die Telekommunikationseinrichtung überträgt ein Signal für einen eingehenden Anruf an die Steuervorrichtung 8. Diese erzeugt daraufhin ein Symbol, welches auf der Anzeigefläche 1 angezeigt wird, welches den eingehenden Anruf signalisiert. Führt der Nutzer im Erfassungsraum 12 nun eine Geste aus, die einem Abnehmen eines Hörers entspricht, wird diese Geste von der Gestenerfassungseinrichtung 11 erfasst und von der Analyseeinrichtung 13 einem Steuerbefehl zugeordnet, der bewirkt, dass der eingehende Anruf angenommen wird. Entsprechend führt eine Geste, die einem Auflegen eines Hörers entspricht, dazu, dass ein eingehender Anruf abgewiesen wird oder eine Telekommunikationsverbindung beendet wird.

Durch weitere Bewegungsgesten kann beispielsweise der Ausschnitt einer geographischen Karte eines Navigationssystems verschoben werden. Ferner können sich öffnende Fenster, die verschiedene Informationen enthalten können, durch eine Bewegungsgeste geschlossen werden.

Schließlich kann eine Geste welche eine Drehbewegung der Hand umfasst, dazu führen, dass eine geographische Karte gedreht wird bzw. ausgerichtet wird, dass ein angezeigtes Photo gedreht wird oder dass eine perspektivisch auf einem Ring angeordnete Liste gedreht wird.

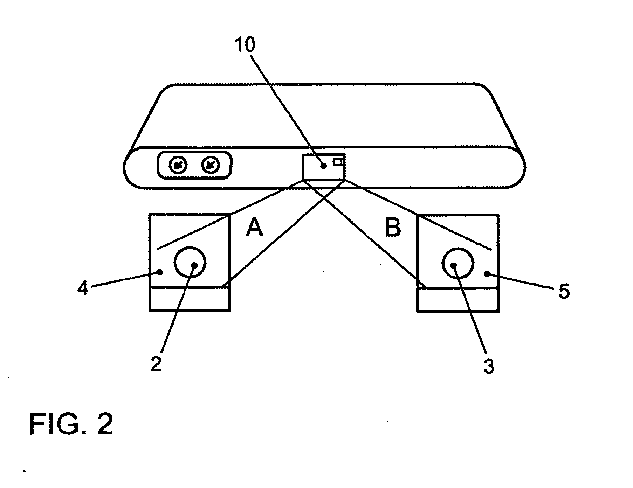

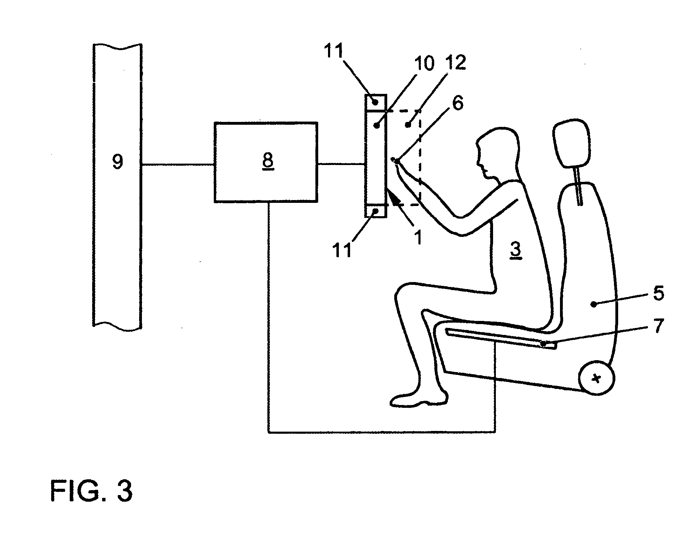

Mit Bezug zu den Fig. 2 und 3 wird das Ausführungsbeispiel der erfindungsgemäßen Vorrichtung und des erfindungsgemäßen Verfahrens erläutert:

Die Vorrichtung des weiteren Ausführungsbeispiels entspricht im Wesentlichen der mit Bezug zu Fig. 1 beschriebenen Vorrichtung des ersten Beispiels. Bei der Vorrichtung des Ausführungsbeispiels ist die Anzeigevorrichtung 10 jedoch so ausgebildet, dass für verschiedene Betrachtungswinkel A und B gleichzeitig verschiedene Anzeigeinhalte anzeigbar sind. Des Weiteren wird mit Bezug zu dem weiteren Ausführungsbeispiel eine Einrichtung erläutert, mit welcher erfasst werden kann, ob die Geste im Erfassungsraum 12 vom Fahrer 2 oder Beifahrer 3 ausgeführt wird.

Bei der Anzeigefläche 1 der Anzeigevorrichtung 10 sind durch eine optische Barriere einem Betrachter rechts und links der mittigen Sichtachse jeweils unterschiedliche Anzeigeinhalte anzeigbar. Wie aus Fig. 2 ersichtlich, betrachtet der Fahrer 2, der auf dem Fahrersitz 4 sitzt, die Anzeigefläche 1 aus dem Betrachtungswinkel A, der Beifahrer 3, welcher auf dem Beifahrersitz 5 sitzt, betrachtet die Anzeigefläche 1 hingegen aus dem Betrachtungswinkel B. Die optische Barriere der Anzeigevorrichtung ist so angeordnet, dass der Fahrer 2 im Winkelbereich A einen anderen Anzeigeinhalt sehen kann, als der Beifahrer 3 aus dem Winkelbereich B. Die Anzeigevorrichtung 10 ist somit mittels der Steuervorrichtung so ansteuerbar, dass für den Fahrer 2 und den Beifahrer 3 gleichzeitig verschiedene Informationen dargestellt werden können.

Der Fahrer 2 bzw. der Beifahrer 3 kann sich mittels einer im Erfassungsraum 12 ausgeführten Geste den Anzeigeinhalt des jeweils anderen anzeigen lassen. Hierfür bewegt z. B. der Beifahrer 3 seine Hand in den Erfassungsraum 12 vor der Anzeigefläche 1. Dabei nähert sich seine Fingerspitze 6 der Anzeigefläche 1 an. Die Sitzposition z. B. des Beifahrers 3, der eine Geste ausführt, kann in diesem Fall wie folgt bestimmt werden:

Wie in Fig. 3 gezeigt, befindet sich im Sitz 5 des Beifahrers 3 eine Elektrodenanordnung 7. Über diese Elektrodenanordnung 7 kann ein Identifikationscode kapazitiv in den Körper des Beifahrers 3 eingekoppelt werden. Der Identifikationscode kann dabei die Sitzposition des Beifahrers 3 sowie den Beifahrer 3 selbst identifizieren. Der identifikations-code wird über den Körper des Beifahrers 3 übertragen und bei der Fingerspitze 6 kapazitiv ausgekoppelt, so dass er an eine in der Anzeigevorrichtung 10 untergebrachten Empfangseinrichtung übertragen werden kann.

Die Empfangseinrichtung ist mit einer Steuervorrichtung 8 verbunden, die wiederum mit der Elektrodeneinrichtung 7 kapazitiv gekoppelt ist. Bei den kapazitiven Kopplungen zwischen der Elektrodeneinrichtung 7 und dem Beifahrer 3 einerseits und dem Beifahrer 3 und der Empfangseinrichtung in der Anzeigevorrichtung 10 andererseits wird ein elektrisches Feld mit einer sehr begrenzten Reichweite von z.B. einigen Zentimetern oder Dezimetern genutzt. Die Reichweite dieses Feldes entspricht im Wesentlichen der Größe des Erfassungsraums 12. Für die Signalübertragung werden relativ niedrige Trägerfrequenzen von einigen 100 kH genutzt, die zu quasi-statischen Feldern führen, d.h. Feldern, für welche weitgehend die für statische Felder zutreffenden physikalischen Ansätze gelten. Hinsichtlich weiterer Details dieser Signalübertragung wird auf die DE 10 2004 048 956 A1 und die darin zitierte weitere Literatur verwiesen, die hiermit durch Bezugnahme in die vorliegende Anmeldung aufgenommen werden. Es können insbesondere die in der DE 10 2004 048 956 A1 verwendeten Schaltungseinrichtungen Anwendung finden. Die Sitzposition des Fahrers 2 kann auf entsprechende Weise bestimmt werden.

Führt der Beifahrer 3 nun im Erfassungsraum 12 eine Geste mit einer horizontalen Bewegung in seine Richtung aus, wird diese Geste einem Steuerbefehl zugeordnet, der bewirkt, dass der Anzeigeinhalt, welcher aktuell der Fahrerseite angezeigt wird, auch für die Beifahrerseite, d. h. im Betrachtungswinkel B, angezeigt wird. Wird umgekehrt erfasst, dass der Fahrer im Erfassungsraum 12 eine Geste mit einer horizontalen Bewegung zum Fahrer ausführt, wird diese Geste einem Steuerbefehl zugeordnet, die bewirkt, dass dem Fahrer der Anzeigeinhalt des Beifahrers angezeigt wird.

### BEZUGSZEICHENLISTE

- 1: Anzeigefläche
- 2: Fahrer
- 3: Beifahrer
- 4: Fahrersitz
- 5: Beifahrersitz
- 6: Fingerspitze eines Nutzers
- 7: Elektrodeneinrichtung
- 8: Steuervorrichtung
- 9: Fahrzeugbus
- 10: Anzeigevorrichtung
- 11: Gestenerfassungseinrichtung
- 12: Erfassungsraum
- 13: Analyseeinrichtung

## Patentansprüche

1. Verfahren zum Bereitstellen einer Benutzerschnittstelle in einem Fahrzeug, bei dem
- auf einer in dem Fahrzeug angeordneten Anzeigefläche (1) Bedienobjekte und/oder Anzeigeobjekte anzeigbar sind,
- eine Geste in einem Erfassungsraum (12) erfasst wird, der vor der Anzeigefläche (1) angeordnet ist,
- die erfasste Geste einem Bedienobjekt und/oder Anzeigeobjekt und einem Steuerbefehl zugeordnet wird und
- der Steuerbefehl ausgeführt wird
**dadurch gekennzeichnet,**
- **dass** für die Fahrerseite und die Beifahrerseite auf der Anzeigefläche gleichzeitig verschiedene Anzeigeinhalte anzeigbar sind und
- **dass** einer Geste, die eine horizontale Bewegung in Richtung des Beifahrers (3) umfasst, ein Steuerbefehl zugeordnet wird, der bewirkt, dass der Anzeigeinhalt für die Fahrerseite auch für die Beifahrerseite angezeigt wird.

2. Verfahren nach Anspruch 1,
**dadurch gekennzeichnet,**
**dass** die Geste eine von der Hand eines Nutzers ausgeführte Bewegung umfasst.

3. Verfahren nach Anspruch 2,
**dadurch gekennzeichnet,**
**dass** das Bedienobjekt ein mittels der Geste steuerbares umfasst und dass die bei der Geste ausgeführte Bewegung das Bewegungselement auf der Anzeigefläche (1) bewegt, wodurch der Steuerbefehl erzeugt wird.

4. Verfahren nach Anspruch 1.
**dadurch gekennzeichnet,**
**dass** erfasst wird, welcher Fahrzeuginsasse die Geste ausführt, und dass bei einer heranwinkenden Geste das animierte Anzeigeobjekt eingeblendet wird und bei einer wegwinkenden Geste das animierte Anzeigeobjekt ausgeblendet wird.

5. Verfahren nach einem der vorhergehenden Ansprüche,
**dadurch gekennzeichnet,**
**dass** auf der Anzeigefläche (1) ein Teil einer Liste angezeigt wird, bei welcher ein Bildlauf in einer Bildlaufrichtung erzeugbar ist, und dass ein Bildlauf erzeugt wird, wenn eine Geste erfasst worden ist, die eine Bewegung in der Bildlaufrichtung umfasst.

6. Verfahren nach einem der vorhergehenden Ansprüche,
**dadurch gekennzeichnet,**
**dass** ein Bedienobjekt zum Einstellen der Lautstärke einer akustischen Ausgabe angezeigt wird und dass einer Geste, die eine Bewegung in einer definierten Richtung umfasst, ein Steuerbefehl zugeordnet wird, welcher bewirkt, dass die Lautstärke erhöht wird, und einer Geste, die eine Bewegung in der entgegengesetzten Richtung umfasst, ein Steuerbefehl zugeordnet wird, welcher bewirkt, dass die Lautstärke erniedrigt wird.

7. Verfahren nach einem der vorhergehenden Ansprüche,
**dadurch gekennzeichnet,**
**dass** ein Bedienobjekt zum Stummschalten einer akustischen Ausgabe angezeigt wird und dass einer Geste, die eine Bewegung in einer definierten Richtung umfasst, ein Steuerbefehl zugeordnet wird, welcher eine Stummschaltung bewirkt, und einer Geste, die eine Bewegung in der entgegengesetzten Richtung umfasst, ein Steuerbefehl zugeordnet wird, welcher die Stummschaltung aufhebt.

8. Verfahren nach einem der vorhergehenden Ansprüche,
**dadurch gekennzeichnet,**
**dass** ein Bedienobjekt zum Signalisieren eines eingehenden Telefonanrufs angezeigt wird und dass einer Geste, bei der eine Bewegung ausgeführt wird, die einem Abnehmen eines Hörers entspricht, ein Steuerbefehl zugeordnet wird, welcher bewirkt, dass der Telefonanruf angenommen wird.

9. Vorrichtung zum Bereitstellen einer Benutzerschnittstelle in einem Fahrzeug mit
- einer Anzeigefläche (1) zum Anzeigen von Bedienobjekten und/oder Anzeigeobjekten, wobei die Anzeigefläche (1) in dem Fahrzeug angeordnet ist,
- einer Gestenerfassungseinrichtung (11) zum Erfassen von Gesten in einem Erfassungsraum (12), der vor der Anzeigefläche (1) angeordnet ist.
- einer Analyseeinrichtung (13), mit welcher die erfassten Gesten Bedienobjekten und/oder Anzeigeobjekten und einem Steuerbefehl zugeordnet werden können,und
- einer Steuervorrichtung (8), mittels welcher der Steuerbefehl ausführbar ist,
**dadurch gekennzeichnet,**
- **dass** die Anzeigefläche (1) so ausgebildet ist, dass für verschiedene Betrachtungswinkel (A, B) gleichzeitig verschiedene Anzeigeinhalte anzeigbar sind und
- **dass** die Analyseeinrichtung (13) einer Geste, die ein horizontale Bewegung in Richtung des Beifahrers (3) umfasst, einen Steuerbefehl zuordnet, der bewirkt, dass der Anzeigeinhalt für die Fahrerseite auch für die Beifahrerseite angezeigt wird.

## Claims

1. Method for providing a user interface in a vehicle, in which
- a display panel (1) arranged in the vehicle can be used to display operator control objects and/or display objects,
- a gesture is sensed in a sensing space (12) which is arranged in front of the display panel (1),
- the sensed gesture is attributed to an operator control object and/or display object and to a control command, and
- the control command is executed,
**characterized**
- **in that** the display panel can be used to display different display contents for the driver side and the passenger side simultaneously, and
- **in that** a gesture which comprises a horizontal movement in the direction of the passenger (3) is attributed a control command which prompts the display content for the driver side also to be displayed for the passenger side.

2. Method according to Claim 1,
**characterized**
**in that** the gesture comprises a movement made by the hand of a user.

3. Method according to Claim 2,
**characterized**
**in that** the operator control object comprises a movement element that can be controlled by means of the gesture and in that the movement made during the gesture moves the movement element on the display panel (1), as a result of which the control command is produced.

4. Method according to Claim 1,
**characterized**
**in that** it involves sensing which vehicle occupant makes the gesture, and in that a waving-over gesture prompts the animated display object to be revealed and a waving-away gesture prompts the animated display object to be concealed.

5. Method according to one of the preceding claims,
**characterized**
**in that** the display panel (1) is used to display a portion of a list in which scrolling can be produced in a scrolling direction, and in that scrolling is produced when a gesture has been sensed which comprises a movement in the scrolling direction.

6. Method according to one of the preceding claims,
**characterized**
**in that** an operator control object for adjusting the volume of an audible output is displayed and in that a gesture which comprises a movement in a defined direction is attributed a control command which prompts the volume to be raised, and a gesture which comprises a movement in the opposite direction is attributed a control command which prompts the volume to be lowered.

7. Method according to one of the preceding claims,
**characterized**
**in that** an operator control object for muting an audible output is displayed and in that a gesture which comprises a movement in a defined direction is attributed a control command which prompts muting, and a gesture which comprises a movement in the opposite direction is attributed a control command which cancels the muting.

8. Method according to one of the preceding claims,
**characterized**
**in that** an operator control object for signalling an incoming telephone call is displayed and in that a gesture which involves making a movement which corresponds to lifting a receiver is attributed a control command which prompts the telephone call to be taken.

9. Apparatus for providing a user interface in a vehicle having
- a display panel (1) for displaying operator control objects and/or display objects, wherein the display panel (1) is arranged in the vehicle,
- a gesture sensing device (11) for sensing gestures in a sensing space (12) which is arranged in front of the display panel (1),
- an analysis device (13) which can be used to attribute the sensed gestures to operator control objects and/or display objects and to a control command, and
- a control apparatus (8) which can be used to execute the control command,
**characterized**
- **in that** the display panel (1) is in a form such that different display contents can be displayed for different viewing angles (A, B) simultaneously, and
- **in that** the analysis device (13) attributes to a gesture which comprises a horizontal movement in the direction of the passenger (3) a control command which prompts the display content for the driver side also to be displayed for the passenger side.

## Revendications

1. Procédé pour fournir une interface utilisateur dans un véhicule, dans lequel
- des objets de commande et/ou des objets d'affichage peuvent être affichés sur une surface d'affichage (1) disposée dans le véhicule,
- un geste dans un espace de détection (12) est détecté, lequel espace de détection est disposé devant la surface d'affichage (1),
- le geste détecté est associé à un objet de commande et/ou un objet d'affichage et à un ordre de commande et
- l'ordre de commande est effectué,
**caractérisé en ce que**
- différents contenus d'affichage peuvent être affichés simultanément sur la surface d'affichage pour le côté conducteur et le côté passager, et
- un geste qui inclut un mouvement horizontal dans la direction du passager est associé à un ordre de commande qui fait en sorte que le contenu d'affichage pour le côté conducteur soit affiché aussi pour le côté passager.

2. Procédé selon la revendication 1,
**caractérisé en ce que**
le geste inclut un mouvement de la main d'un utilisateur.

3. Procédé selon la revendication 2,
**caractérisé en ce que**
l'objet de commande inclut un élément de déplacement pouvant être commandé par le geste, et **en ce que** le mouvement effectué par le geste déplace l'élément de déplacement sur la surface d'affichage (1), de sorte que l'ordre de commande soit effectué.

4. Procédé selon la revendication 1,
**caractérisé en ce que**
l'on détecte quel occupant du véhicule effectue le geste, et **en ce que** dans le cas d'un geste invitant vers l'avant, l'objet d'affichage animé est affiché et dans le cas d'un geste de repoussement, l'objet d'affichage animé est supprimé.

5. Procédé selon l'une quelconque des revendications précédentes,
**caractérisé en ce que**
sur la surface d'affichage (1) est affichée une partie d'une liste, pour laquelle un déroulement d'image peut être produit dans une direction de déroulement d'image, et **en ce qu'**un déroulement d'image est produit en cas de détection d'un geste qui inclut un mouvement dans la direction du déroulement d'image.

6. Procédé selon l'une quelconque des revendications précédentes,
**caractérisé en ce**
**qu'**un objet de commande pour ajuster le niveau sonore d'une sortie acoustique est affiché et en ce qu'un geste qui inclut un mouvement dans une direction définie est associé à un ordre de commande qui fait en sorte que le niveau sonore soit accru, et un geste qui inclut un mouvement dans la direction opposée est associé à un ordre de commande qui fait en sorte que le niveau sonore soit réduit.

7. Procédé selon l'une quelconque des revendications précédentes,
**caractérisé en ce**
**qu'**un objet de commande pour couper le son d'une sortie acoustique est affiché et en ce qu'un geste qui inclut un mouvement dans une direction définie est associé à un ordre de commande qui provoque une coupure du son et un geste qui inclut un mouvement dans la direction opposée est associé à un ordre de commande qui supprime la coupure du son.

8. Procédé selon l'une quelconque des revendications précédentes,
**caractérisé en ce**
**qu'**un objet de commande pour signaler un appel téléphonique entrant est affiché, et en ce qu'un geste, dans lequel un mouvement est effectué de manière à correspondre à la prise d'un écouteur, est associé à un ordre de commande qui fait en sorte que l'appel téléphonique soit pris.

9. Dispositif pour fournir une interface utilisateur dans un véhicule, comprenant :
- une surface d'affichage (1) pour afficher des objets de commande et/ou des objets d'affichage, la surface d'affichage (1) étant disposée dans le véhicule,
- un système de détection de geste (11) pour détecter des gestes dans un espace de détection (12) qui est disposé devant la surface d'affichage (1),
- un système d'analyse (13) avec lequel les gestes détectés peuvent être associés à des objets de commande et/ou des objets d'affichage et à un ordre de commande, et
- un dispositif de commande (8) avec lequel l'ordre de commande peut être effectué,
**caractérisé en ce que**
- la surface d'affichage (1) est réalisée de telle sorte que pour différents angles d'observation (A, B), des contenus d'affichage différents puissent être affichés simultanément et
- le système d'analyse (13) d'un geste qui inclut un mouvement horizontal dans la direction du passager (3), est associé à un ordre de commande qui fait en sorte que le contenu d'affichage soit affiché pour le côté conducteur et aussi pour le côté passager.
